# EUROPEAN PATENT SPECIFICATION

(11) **EP 2 889 104 B1**
(45) Date of publication and mention of the grant of the patent: **08.07.2020**
(21) Application number: 14197843.7
(22) Date of filing: 15.12.2014
(51) Int. Cl.: B23P 15/00, F16G 5/16

(54) **Method for forming a carrier ring suitable for use in a drive belt for a continuously variable transmission**
Verfahren zur Herstellung eines Tragrings zur Verwendung in einem Antriebsriemen für ein stufenloses Getriebe
Procédé de formation d'une bague de support adaptée à une utilisation dans une courroie d'entraînement pour une transmission variable en continu

(30) Priority: 24.12.2013 NL 1040574
(43) Date of publication of application: 01.07.2015
(73) Proprietor: Robert Bosch GmbH, 70442 Stuttgart (DE)
(72) Inventor: Brandsma, Arjen, 5045WN Tilburg (NL); Birnesser, Andreas, 5000AM Tilburg (NL); Ramsayer, Reiner, 5000AM Tilburg (NL); Cornelissen, Ronald, 5000AM Tilburg (NL)
(74) Representative: Plevier, Gabriël Anton Johan Maria

(56) References cited:
- WO-A1-2007/073158
- WO-A1-2009/132689
- JP-A- 2007 070 696
- Scheerman: "Leitfaden für den Schweißkonstrukteur. Die Schweißtechnische Praxis:Band 17", 1 January 1997 (1997-01-01), 1997, XP002726408, ISBN: 387155541X * point 12; page 160; figures *

## Description

This disclosure relates to a method for forming a ring from steel basic material that is destined to function as a carrier of transverse elements in a closed-loop drive belt for a continuously variable transmission, comprising the following steps:
- providing a strip of basic material with an initial thickness of about 0.4 mm;
- bending the strip into a circular or ring shape, whereby distal ends of the strip are touching, or at least facing each other;
- fixing these distal ends of the strip to each other by welding to form the steel carrier ring; and
- subjecting the steel carrier ring to a rolling process in circumference direction, whereby its thickness is reduced to less than 0.2 mm.

A method according to the preamble of claim 1 is known from, for instance, the international patent application publication WO2009/ 132689-A1. This document also discloses the preamble of product claim 2.

A drive belt for a continuously variable transmission is generally known. Usually, such a drive belt comprises two sets of endless, i.e. closed-loop rings that carry a multitude of transverse elements of the drive belt, which transverse elements are arranged in an essentially contiguous row along the entire circumference thereof. These carrier rings of the drive belt are relatively flat, i.e. the radial distance between an inner circumference and an outer circumference of the carrier rings is relatively small with respect to the dimension in an axial direction.

In a continuously variable transmission, the drive belt is disposed between two cooperating pulleys where between a continuously variable speed ratio is realized. During operation, the drive belt transmits a torque from one of the pulleys to the other one pulley, a/o by the transverse elements thereof pushing each other from the said one pulley to the said other one pulley.

During operation of the continuously variable transmission, the carrier rings of the drive belt are exposed to bending and pulling forces. The bending forces are substantially determined by the thickness of the carrier rings and the extent to which ring portions are bent at the moments that they are present in the pulleys. The pulling forces are substantially determined by the tensile force with which the drive belt is suspended between both pulleys.

As a consequence of the said bending and pulling forces, metal fatigue of a carrier ring will play a role in a possible failure of the drive belt. Metal fatigue is related to the type and the quality of the used steel. For example, as a consequence of irregularities in the material, hair cracks may occur. Normally, such hair cracks will form at a location where the tension stress is highest. For the present carrier rings that are repeatedly bend such tension stress will normally be highest at or near its surface, a/o at or near the axial sides of the carrier ring. Thus, for providing the carrier rings with optimal fatigue properties and, hence, also the drive belt, it is important to manufacture these with a high surface quality, i.e. with an ultimately smooth outer surface that is free from defects.

In the manufacture of the carrier ring, a basic material having the required material properties for drive belt application of the carrier ring is provided in, for instance, a coiled-up sheet form. From this basic material a strip is cut with length, width and thickness dimensions that are adapted to (obtain) the final carrier ring of required dimensions. The distal ends of the strip, as seen in the longitudinal direction thereof, are placed opposite one another and are fixed to one another by means of a welding process to form a continuous carrier ring. Typically, plasma-arc welding or laser welding is applied for this purpose, wherein a plasma arc or laser beam is passed from one axial side of the strip to the other one side thereof. The intensity of the plasma-arc or laser beam is set to melt a small part of both the said distal ends of the strip, which melted strip parts solidify into together as one once the plasma arc or laser beam has passed. Furthermore, the manufacture of the final carrier ring for the present drive belt application thereof, is known to include several more processes such as rolling, hardening and nitriding.

It is known from the PCT patent publication WO2007/073158-A1 that the weld that is formed between the said distal ends of the strip can show imperfections. In particular, an indentation is typically formed in the width, i.e. axial direction of the carrier ring at the location of the weld. This axial indentation appears to result from the surface tension of the melt bath and of a possible flow in that weld bath due to a temperature gradient therein. According to WO2007/073158-A1 such indentation should be avoided, at least in the drive belt application of the carrier ring. And, to that end, WO2007/073158-A1, proposes to place an abutment against the axial sides of the strip to be welded at the location of the weld, i.e. of the said distal ends thereof.

According to the present disclosure and in contrast with WO2007/073158-A1, it was found that the said indentation is not necessarily formed to an equal extent on both axial sides of the carrier ring. In fact applicant observed that the indentation is considerably larger on the axial side of the carrier ring where the welding process ends, i.e. where the plasma-arc or laser beam passes from the strip into the surroundings to complete the weld, as compared to the indentation formed on the opposite axial side of the carrier ring where the welding process was started, i.e. where the plasma-arc or laser beam first enters from the surroundings to in-between the distal ends of the strip.

Based on the above observation, the present disclosure proposes to provide the weld in two phases, wherein, in a first phase of the welding process, the welding is started at a first axial side of the strip and is then continued towards the opposite axial side of the strip, however only to within the axial extent of the strip, where it is stopped, and wherein, in a second phase of the welding process, the welding is started at the opposite, i.e. second axial side of the strip and is then continued towards the first axial side of the strip, however, again only to within the axial extent of the strip.

In order to avoid having to complete the overall weld in a third phase of the welding process in-between the two positions of the respective phases where the welding is stopped, the welding in the second phase of the welding process is stopped only at a position that lies in the axial direction beyond the position where the welding was stopped in the first phase thereof. Or, in other words, a weld (part) formed in the said second phase of the welding process partly overlaps with the weld (part) formed in the said first phase thereof.

The above-described basic features of the present disclosure will now be elucidated by way of example with reference to the accompanying figures.
Figure 1 is a schematic illustration of a known drive belt and of a transmission incorporating such known belt.
Figure 2 is a schematic illustration of a part of the known drive belt, which includes two sets of a number of flexible steel carrier rings, as well as a plurality of transverse members.
Figure 3 figuratively represents a known manufacturing method of the drive belt carrier ring.
Figure 4 illustrates the known setup of the process step of strip welding from the overall manufacturing method of the drive belt carrier ring.
Figure 5 illustrates a novel setup of the process step of strip welding.

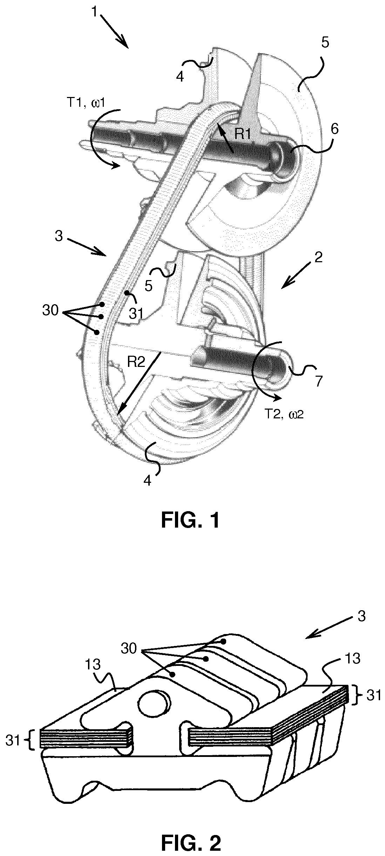

Figure 1 shows schematically a continuously variable transmission (CVT) with a drive belt 3 wrapped around two pulleys 1 and 2. Each pulley 1, 2 is provided with two conical pulley discs 4, 5, where between an annular, predominantly V-shaped pulley groove is defined and whereof one disc 4 is axially moveable along a respective pulley shaft 6, 7 over which it is placed. A drive belt 3 is wrapped around the pulleys 1, 2 for transmitting a rotational movement ω and an accompanying torque T from the one pulley 1, 2 to the other 2, 1. Each pulley 1, 2 generally also comprises activation means that can impose on the said at least one disc 4 thereof an axially oriented clamping force directed towards the respective other pulley disc 5 thereof, such that the belt 3 can be clamped between these discs 4, 5. Also, a (speed) ratio of the CVT between the rotational speed of the driven pulley 2 and the rotational speed of the driving pulley 1 is determined thereby. This CVT is known per se, in particular from its application in automobiles.

An example of a known drive belt 3 is shown in more detail figure 2 in a section thereof. The drive belt 3 is made up of two sets 31 of mutually nested, flat and flexible steel rings 13 that carry a plurality of transverse members 30. The transverse members 30 are arranged in mutual succession along the circumference of the ring sets 31, in such manner that they can slide relative to and in the circumference direction of the ring sets 31.

The transverse segments 30 take-up the said clamping force, such when an input torque T is exerted on the so-called driving pulley 1, friction between the discs 4, 5 and the belt 3, causes a rotation of the driving pulley 1 to be transferred to the so-called driven pulley 2 via the likewise rotating drive belt 3.

During operation in the CVT the drive belt 3 and in particular the carrier rings 13 thereof are subjected to a cyclically varying tensile and bending stresses, i.e. a fatigue load. Typically the resistance against metal fatigue, i.e. the fatigue strength of the carrier rings 13, thus determines the functional life span of the drive belt 3. Therefore, it has been a long standing and general development aim to optimize the fatigue strength of the carrier ring 13 at a minimum combined material and processing cost.

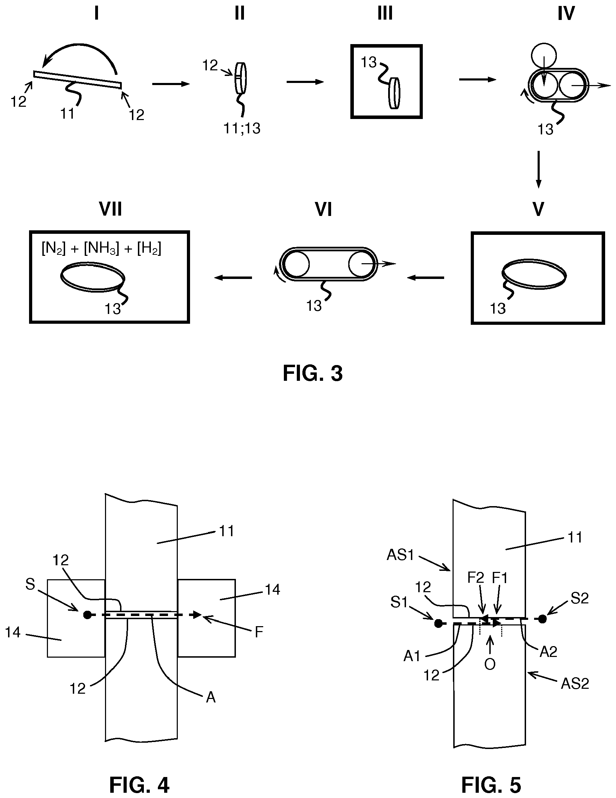

Figure 3 illustrates a relevant part of the known manufacturing method for the carrier rings 13 to be applied in the ring sets 31 of the drive belt 3, as it is typically applied in the art. The separate process steps of the known manufacturing method are indicated by way of Roman numerals.

In a first process step I a strip 11 of a maraging steel basic material having a thickness of around 0.4 mm, is bend into a circular shape with the distal ends of the strip being placed against one another. In a second process step II the distal ends 12 of the strip 11 are welded together to form a carrier ring 13, typically by means of a plasma-arc welding process. In a third step III, the carrier ring 13 is annealed to remove the heat affected zone resulting from the welding process step II. Thereafter, in a fourth process step IV, the carrier ring 13 is rolled to reduce the thickness thereof to, typically, less than 0.2 mm, e.g. 0.185 mm, while being elongated. The carrier ring 13 is subjected to a further, i.e. carrier ring annealing process step V for removing the work hardening effect of the previous rolling process step IV by recovery and re-crystallization of the ring material. Thereafter, in a sixth process step VI, the carrier ring 13 is calibrated by mounting it around two rotating rollers and stretching it to a predefined circumference length by forcing the said rollers apart. In this sixth process step VI, also internal stresses are imposed on the carrier ring 13. Finally, the carrier ring 13 is heat-treated in a seventh process step VII of combined ageing or bulk precipitation hardening and nitriding or case hardening. More in particular, such combined heat-treatment involves keeping the carrier ring 13 in an oven chamber containing a controlled gas atmosphere that comprises ammonia, nitrogen and hydrogen gas. By this heat treatment process VII both the wear resistance and the fatigue strength of the ring material is increased remarkably.

Figure 4 illustrates the known process step II of strip welding from the overall manufacturing method of the drive belt carrier ring 13 in more detail, however not to scale. In figure 4 the strip 11 to be welded is enclosed widthwise, i.e. axial direction, between two weld-end abutments 14 at the location where the said distal ends 12 of the strip 11 meet after it has been bend into an approximately circular shape.

In the actual welding together of the distal ends 12 of the strip 11, a welding energy source such as a plasma arc or laser beam is started at a position S at a first one of the weld-end abutments 14 and is then moved in axial direction at a predetermined velocity over the strip 11 towards and finally across the respective other one of the abutments 14 until it reaches an final position F where it is switched off. Such movement of the plasma arc or laser beam relative to the strip 11 and the abutments 14 is indicated in figure 4 by the dashed arrow A. The velocity and intensity of the plasma arc or laser beam are chosen such that a small part of the material of the strip 11 at either distal end 12 thereof melts and forms a single melt pool that solidifies after the plasma arc or laser beam has passed. The abutments 14 are provided to prevent that an axial indentation is formed in the (welded) carrier ring 13 at the position of the weld, i.e. to provide a surface for the melted strip material to adhere to in the axial direction.

Figure 5 illustrates a novel way of carrying out the process step II of strip welding that does favorably not require the use of the known weld-end abutments 14. According to the present disclosure, the actual welding together of the distal ends 12 of the strip 11 is realized in two phases that are respectively indicated in figure 5 by the dashed arrows A1 and A2. In a first phase of the welding process, indicated by the arrow A1, the plasma-arc or laser beam is switched on at a starting position S1 beyond a first axial side AS1 of the strip 11 and is then moved in the axial direction relative to the strip 11 to a finishing position F1 inside the strip, i.e. to a first finishing position F1 in-between the axial sides AS1, AS2 thereof, where the plasma-arc or laser beam is switched off and the welding stops. Thereafter, in a second phase of the welding process, indicated by the arrow A2, the plasma-arc or laser beam is switched on at a starting position S2 beyond the other, i.e. second axial side AS2 of the strip 11 opposite the said first axial side AS1 thereof and is then moved in the axial direction relative to the strip 11 to a second finishing position F2 in-between the axial sides AS1, AS2 of the strip 11, where the plasma-arc or laser beam is switched off again and the welding stops.

As is also illustrated in figure 5, a, preferably small, overlap O is preferably provided between the first and second phase of the welding process. Thus, in other words, in the process step II of strip welding, a weld is formed between the distal ends 12 of the strip 11 in two, mutually overlapping weld parts that each start from a respective axial side AS1; AS2 of the strip 11 and extend towards the respectively opposite axial side AS1; AS2 of the strip 11 to a position beyond the axial middle of the strip 11.

## Claims

1. Method for forming a steel ring (13) for use as a carrier ring (13) in a drive belt (3) for a continuously variable transmission with two pulleys (1, 2) and the drive belt (3) and including the steps of:
- providing a strip (11) of basic material with an initial thickness of about 0.4 mm;
- bending the strip (11) into a circular or ring shape, whereby distal ends (12) of the strip (11) are touching, or at least facing each other;
- fixing the distal ends (12) of the strip (11) to each other by welding to form the steel ring (13),
**characterised in that** the welding of the strip (11) is carried out as or in a laser or a plasma-arc welding process in the following two phases:
- a first phase wherein the distal ends (12) of the strip (11) are welded together from a fist starting position (S1) beyond a first axial side (AS1) of the strip (11) to a first finishing position (F1) located within the width of the strip (11) and
- a second phase wherein the distal ends (12) of the strip (11) are welded together from a second starting position (S2) beyond a second, opposite axial side (AS2) of the strip (11) to a second finishing position (F2) located within the width of the strip (11) in-between the said first finishing position (F1) and the said first axial side (AS1) of the strip (11); and, after welding, of
- subjecting the steel ring (13) to a rolling process in circumference direction, whereby the thickness thereof is reduced to less than 0.2 mm.

2. Drive belt (3) with transverse elements (30) and at least one ring set (31) whereon the transverse elements (30) are mounted and which ring set (31) is composed of a number of mutually, radially stacked carrier rings (13) **characterised in that** the rings are formed with the method according to the preceding claim.

## Patentansprüche

1. Verfahren zur Herstellung eines Stahlrings (13) zur Verwendung als ein Tragring (13) in einem Antriebsriemen (3) für ein stufenloses Getriebe mit zwei Riemenscheiben (1, 2) und dem Antriebsriemen (3) und mit den folgenden Schritten:
- Bereitstellen eines Bands (11) aus einem Grundmaterial mit einer Anfangsdicke von ca. 0,4 mm;
- Biegen des Bands (11) zu einer kreisförmigen oder Ringform, wodurch sich distale Enden (12) des Bands (11) berühren oder zumindest zueinander weisen;
- Aneinanderfixieren der distalen Enden (12) des Bands (11) durch Schweißen zur Bildung des Stahlrings (13), **dadurch gekennzeichnet, dass**
das Schweißen des Bands (11) als ein oder in einem Laser- oder einem Plasma-Lichtbogenschweißprozess in den folgenden beiden Phasen durchgeführt wird:
- einer ersten Phase, in der die distalen Enden (12) des Bands (11) von einer ersten Startposition (S1) hinter einer ersten axialen Seite (AS1) des Bands (11) bis zu einer sich innerhalb der Breite des Bands (11) befindenden ersten Endposition (F1) zusammengeschweißt werden und
- einer zweiten Phase, in der die distalen Enden (12) des Bands (11) von einer zweiten Startposition (S2) hinter einer zweiten, gegenüberliegenden axialen Seite (AS2) des Bands (11) bis zu einer sich innerhalb der Breite des Bands (11) zwischen der ersten Endposition (F1) und der ersten axialen Seite (AS1) des Bands (11) befindenden zweiten Endposition (F2) zusammengeschweißt werden; und nach dem Schweißen mit dem Schritt des
- Beaufschlagens des Stahlrings (13) mit einem Walzprozess in Umfangsrichtung, wodurch seine Dicke auf weniger als 0,2 mm reduziert wird.

2. Antriebsriemen (3) mit Querelementen (30) und mindestens einem Ringsatz (31), auf dem die Querelemente (30) angebracht sind, wobei der Ringsatz (31) aus mehreren radial aufeinander gestapelten Trägerringen (13) gebildet ist, **dadurch gekennzeichnet, dass** die Ringe mit dem Verfahren nach dem vorhergehenden Anspruch hergestellt sind.

## Revendications

1. Procédé de formation d'une bague en acier (13) pour l'utilisation en tant que bague de support (13) dans une courroie d'entraînement (3) pour une transmission variable en continu avec deux poulies (1, 2) et la courroie d'entraînement (3), et comportant les étapes suivantes :
- fournir une bande (11) de matériau de base avec une épaisseur initiale d'environ 0,4 mm ;
- fléchir la bande (11) en une forme circulaire ou annulaire, des extrémités distales (12) de la bande (11) se touchant ou au moins se faisant face ;
- fixer les extrémités distales (12) de la bande (11) l'une à l'autre par soudage pour former la bague en acier (13),
**caractérisé en ce que**
le soudage de la bande (11) est effectué en tant que, ou dans un, processus de soudage laser ou à l'arc plasma dans les deux phases suivantes :
- une première phase dans laquelle les extrémités distales (12) de la bande (11) sont soudées l'une à l'autre à partir d'une première position initiale (S1) au-delà d'un premier côté axial (AS1) de la bande (11) jusqu'à une première position finale (F1) située à l'intérieur de la largeur de la bande (11) et
- une deuxième phase dans laquelle les extrémités distales (12) de la bande (11) sont soudées l'une à l'autre à partir d'une deuxième position initiale (S2) au-delà d'un deuxième côté axial opposé (AS2) de la bande (11) jusqu'à une deuxième position finale (F2) située à l'intérieur de la largeur de la bande (11) entre ladite première position finale (F1) et ledit premier côté axial (AS1) de la bande (11) ; et, après le soudage, avec l'étape suivante :
- soumettre la bague en acier (13) à un processus de laminage dans la direction circonférentielle pour réduire son épaisseur à moins de 0,2 mm.

2. Courroie d'entraînement (3) avec des éléments transversaux (30) et au moins un ensemble de bagues (31) sur lequel sont montés les éléments transversaux (30), lequel ensemble de bagues (31) étant composé d'une pluralité de bagues de support (13) empilées ensemble radialement,
**caractérisée en ce que** les bagues sont formées avec le procédé selon la revendication précédente.
